(19) Europäisches Patentamt
European Patent Office
Office européen des brevets

(11) EP 0 925 315 B1

(12) **FASCICULE DE BREVET EUROPEEN**

(45) Date de publication et mention de la délivrance du brevet:
**27.11.2002 Bulletin 2002/48**

(21) Numéro de dépôt: **98935088.9**

(22) Date de dépôt: **03.07.1998**

(51) Int Cl.$^7$: **C08F 222/10**, C08F 220/28, C08F 220/30, G02B 1/04

(86) Numéro de dépôt international:
**PCT/FR98/01421**

(87) Numéro de publication internationale:
**WO 99/002574 (21.01.1999 Gazette 1999/03)**

(54) **COMPOSITIONS DE MONOMERES POLYMERISABLES, SUBSTRATS POLYMERES TRANSPARENTS, ET ARTICLES D'OPTIQUE ET OPHTALMIQUES OBTENUS**

ZUSAMMENSETZUNG POLYMERISIERBARER MONOMERE, POLYMERE DURCHSICHTIGE SUBSTRATE UND DARAUS ERHALTENE OPTISCHE- UND AUGENMEDIZINISCHE ARTIKEL

POLYMERISABLE MONOMER COMPOSITIONS, TRANSPARENT POLYMER SUBSTRATES, AND RESULTING OPTICAL AND OPHTHALMOLOGIC ARTICLES

(84) Etats contractants désignés:
**DE ES FR GB IT**

(30) Priorité: **07.07.1997 FR 9708614**
**30.07.1997 FR 9709733**

(43) Date de publication de la demande:
**30.06.1999 Bulletin 1999/26**

(73) Titulaire: **ESSILOR INTERNATIONAL COMPAGNIE GENERALE D'OPTIQUE**
**94227 Charenton cédex (FR)**

(72) Inventeurs:
- **WIDAWSKI, Gilles**
  **F-75011 Paris (FR)**
- **CANO, Jean-Paul**
  **F-94430 Chennevières-sur-Marne (FR)**
- **MAGNE, Jean-François**
  **NL-1862 AV Bergen (NL)**

(74) Mandataire: **Catherine, Alain et al**
**Cabinet Harlé & Phélip**
**7, rue de Madrid**
**75008 Paris (FR)**

(56) Documents cités:

| | |
|---|---|
| EP-A- 0 376 254 | EP-A- 0 378 144 |
| EP-A- 0 691 550 | WO-A-95/11219 |
| FR-A- 2 699 541 | US-A- 5 583 191 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 925 315 B1

## Description

La présente invention concerne d'une manière générale des compositions de monomères polymérisables qui, après polymérisation, fournissent des substrats polymérisés transparents convenant particulièrement à la fabrication d'articles d'optique et ophtalmiques tels que des lentilles ou des verres de lunettes.

Plus particulièrement, la présente invention concerne de telles compositions de monomères polymérisables qui, après polymérisation, conduisent à des substrats transparents à indice de réfraction de valeur généralement inférieure à 1,54, de préférence inférieure à 1,52 et préférentiellement proche de 1,5, et de faible masse volumique.

La présente invention concerne également les substrats obtenus par polymérisation des compositions de monomères polymérisables selon l'invention ainsi que les articles d'optique et ophtalmiques obtenus à partir de ces substrats.

Les articles d'optique et ophtalmiques doivent posséder l'ensemble de caractéristiques suivantes :

- une transparence élevée (transmission généralement supérieure à 85 % et de préférence supérieure ou égale à 90 %), avec une absence ou éventuellement une très faible diffusion de la lumière ;
- un nombre d'Abbe, élevé supérieur ou égal à 30, et de préférence supérieur ou égal à 35, afin d'éviter des aberrations chromatiques ;
- un faible indice de jaune et une absence de jaunissement au cours du temps ;
- une bonne résistance aux chocs et à l'abrasion ;
- une bonne aptitude aux traitements divers (dépôt de revêtement dur, anti-reflet, primaire anti-chocs ...), et en particulier une bonne aptitude à la coloration
- une bonne aptitude aux traitements de surfaçage et de débordage, sans que la géométrie globale du verre soit déformée au cours de ces opérations.

En outre, les compositions polymérisables pour la fabrication d'articles optiques et ophtalmiques doivent être également faciles à mettre en oeuvre sur le plan industriel.

Il est également souhaitable que les compositions puissent être aisément et rapidement polymérisées, en particulier qu'elles puissent être polymérisées par des techniques de photopolymérisation ou des techniques mixtes de photopolymérisation et de polymérisation thermique permettant de réduire les temps de cycle de fabrication des articles.

Il est aussi souhaitable que les compositions polymérisables puissent être mises en oeuvre dans des procédés de surmoulage.

Enfin, il est encore souhaitable que les compositions polymérisables et les substrats polymérisés obtenus soient aptes à une photochromatisation afin d'obtenir des articles d'optiques et ophtalmiques doués de propriétés photochromiques.

La présente invention a donc pour objet de fournir une composition de monomères polymérisables qui, après polymérisation, conduit à des substrats transparents répondant aux exigences ci-dessus.

La présente invention a également pour objet les substrats transparents, en particulier des substrats ayant des propriétés photochromiques, obtenus par polymérisation par voie thermique, photochimique ou par une combinaison de ces deux voies, des compositions selon l'invention.

Enfin, la présente invention a également pour objet des articles d'optique et ophtalmiques, en particulier des substrats ayant des propriétés photochromiques, tels que des lentilles et des verres de lunettes obtenus à partir des substrats ci-dessus.

Selon l'invention, la composition de monomères polymérisables comprend, par rapport au poids total des monomères polymérisables présents dans la composition :

- 30 à 100 % d'un ou plusieurs monomères (I) de formule :

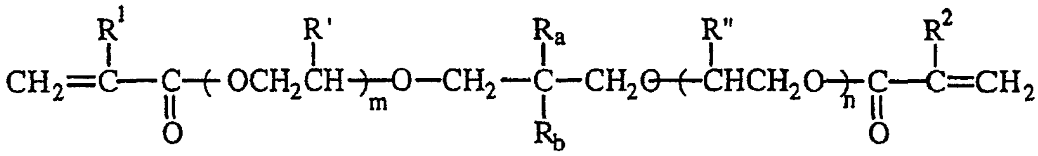 (I)

dans laquelle $R^1$, $R^2$, R' et R" représentent, indépendamment les uns des autres, un atome d'hydrogène ou

un radical méthyle, $R_a$ et $R_b$, identiques ou différents, représentent chacun un groupe alkyle ayant 1 à 10 atomes de carbone à la condition que $R_a$ et $R_b$ ne représentent pas simultanément un groupe méthyle et m et n sont des entiers satisfaisant à la relation $2 \leq m + n \leq 20$ ;

- 0 à 70 % d'au moins un autre monomère (II) polymérisable par voie radicalaire, différent du monomère (I), tel qu'un substrat transparent résultant de la polymérisation de la composition ait une température de transition vitreuse satisfaisant à la relation 70°C ≤ Tg ≤ 110°C ; et
- au moins un système d'amorçage de la polymérisation.

Le premier constituant important des compositions polymérisables selon l'invention est le (ou les) monomère (s) (I) répondant à la formule ci-dessus.

De préférence, dans la formule des monomères (I) ci-dessus, $R^1$ et $R^2$ représentent un groupe méthyle, et $R_a$ et $R_b$ représentent un groupe alkyle ayant 2 à 10 atomes de carbone. De préférence, $R_a$ et $R_b$ représentent un radical éthyle, propyle ou butyle. De préférence encore, $R_a$ et $R_b$ sont différents l'un de l'autre et en particulier, $R_a$ et $R_b$ représentent respectivement un groupe éthyle et un groupe butyle (n-butyle de préférence).

De préférence, m et n sont des entiers tels que $2 \leq m + n \leq 10$, mieux $2 \leq m + n \leq 5$.

Parmi les monomères (I) particulièrement recommandés dans les compositions selon l'invention, on peut citer les 2,2-dialkyl($C_2$-$C_{10}$)-1,3-propanediol 2x-propoxylé di(méth)acrylate et les 2,2-dialkyl($C_2$-$C_{10}$)-1,3-propanediol 2x-éthoxylé di(méth)acrylate.

Comme indiqué précédemment, les monomères (I) particulièrement recommandés sont les diméthacrylates et tout particulièrement le composé 2-éthyl-2-n-butyl-1,3-propanediol 2x-propoxylé diméthacrylate (EBP 2PO DMA).

Des monomères (méth)acryliques (I) répondant à la formule ci-dessus, ainsi que leur procédé de préparation sont décrits dans le document WO-95/11219. Les monomères (I) des compositions de la présente invention peuvent être préparés par le procédé décrit dans le document cité.

Brièvement, ces monomère (méth)acryliques (I) sont préparés par au moins deux étapes d'alcoxylation et d'acrylation. Initialement, le 2,2(dialkyl)-1,3-propanediol est alcoxylé par réaction avec l'oxyde d'alkylène correspondant. Le produit résultant de l'alcoxylation est finalement estérifié avec l'acide acrylique et/ou méthacrylique pour obtenir le monomère (méth)acrylique voulu. On peut également, à la place de l'esterification directe par les acides (méth) acryliques utiliser une réaction de transesterification en utilisant les (méth)acrylates correspondant. Pour plus de détails quant au procédé de préparation des monomères (méth)acryliques (I), on pourra se reporter au document WO-95/11219.

Le ou les monomères (I) représentent 30 à 100 % en poids des monomères polymérisables présents dans les compositions, de préférence 30 à 70 % en poids, mieux de 40 à 70 % en poids.

Le second constituant important des compositions polymérisables selon l'invention, qui peut être éventuellement présent dans ces compositions, est un monomère ou un mélange de monomères (II), différents des monomères (I), polymérisable par voie radicalaire. Ces monomères polymérisables (II) doivent être tels que les substrats transparents résultant de la polymérisation des compositions polymérisables aient une température de transition vitreuse satisfaisant à la relation 70°c ≤ Tg ≤ 110°C, de préférence 80°C ≤ Tg ≤ 100°C.

Les monomères polymérisables (II) comportent en général une ou plusieurs fonctions (méth)acrylate et/ou un ou plusieurs groupes allyliques.

De préférence, ces monomères (II) comportent une, deux ou trois fonctions (méth)acrylate, mieux une ou deux fonctions (méth)acrylate ou un ou deux groupes allyliques ou encore un groupe allylique et une fonction (méth) acrylate. De préférence encore, les monomères polymérisables (II) comportent des fonctions méthacrylate, mieux deux fonctions méthacrylate, deux groupes allyliques ou un groupe allylique et une fonction (méth)acrylate.

Une première classe préférée des monomères polymérisables (II) comprend les monomères répondant à la formule :

$$R^3\text{-}O(R^5O)_pR^4 \qquad \text{(IIa)}$$

dans laquelle $R^3$ est un radical acryloyle ou méthacryloyle, $R^4$ est un atome d'hydrogène, un radical acryloyle, un radical méthacryloyle ou un groupe hydrocarboné ayant 1 à 40 atomes de carbone, $R^5$ est un groupe alkylène ayant 1 à 5 atomes de carbone et p est un entier de 2 à 50.

De préférence, $R^3$ et $R^4$ représentent des groupes méthacryloyles et $R^5$ est un groupe éthylène, propylène ou butylène, mieux un groupe éthylène ou propylène.

Parmi les monomères de formule (IIa), on peut citer les polyméthylène glycol mono et di(méth)acrylates, les polyéthylène glycol mono et di(méth)acrylates, les polypropylène glycol mono et di(méth)acrylates, les alcoxypolyméthylène glycol mono et di(méth)acrylates, les alcoxypolyéthylène glycol mono et di(méth)acrylates et les polyéthylène

glycol polypropylène glycol mono et di(méth)acrylates. Ces monomères sont décrits entre autres dans le document US-A-5,583,191.

Une deuxième classe de monomères (II) convenant pour les compositions de la présente invention comprend les monomères répondant à la formule :

$$R^6\text{-}Y\text{-}R^7 \qquad \text{(IIb)}$$

où $R^6$ et $R^7$ représentent un atome d'hydrogène, un groupe acryloyle ou un groupe méthacryloyle, l'un au moins de $R^6$ ou $R^7$ étant un groupe (méth)acryloyle, et Y est un radical alkylène ayant au moins 10 atomes de carbone. De préférence, $R^6$ et $R^7$ sont des groupes méthacryloyle et Y est un groupe alkylène ayant 2 à 50 atomes de carbone.

Une troisième classe de monomères (II) convenant pour les compositions selon l'invention comprend les monomères répondant à la formule :

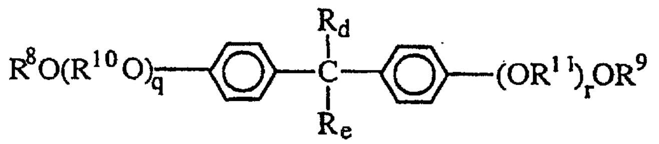

(IIc)

dans laquelle $R^8$ et $R^9$ représentent un atome d'hydrogène, un groupe acryloyle ou un groupe méthacryloyie, à la condition que l'un au moins de $R^8$ ou $R^9$ soit un groupe (méth)acryloyle, $R_d$ et $R_e$ représentent H ou $CH_3$, $R^{10}$ et $R^{11}$ représentent un groupe alkylène en $C_1$-$C_5$, et q et r sont tels que la valeur moyenne $\overline{q+r} \geq 2$.

De préférence, $R^8$ et $R^9$ sont des groupes méthacryloyle, $R_d$ et $R_e$ sont des groupes méthyle, $R^{10}$ et $R^{11}$ sont des groupes éthylène ou propylène et $4 \leq \overline{q+r} \leq 50$.

Une quatrième classe de monomères (II) utile dans la présente invention comprend les monomères allyliques, de préférence les monomères difonctionnels tels que les di(allylcarbonate) de poly (alkylène) glycol, et les monomères comportant une fonction (méth)acrylate et un groupe allylique, en particulier une fonction méthacrylate et un groupe allylique.

Parmi les di(allylcarbonate) de poly(alkylène) glycol convenant pour la présente invention, on peut citer le di (2-chloroallylcarbonate) d'éthylène glycol, le diallylcarbonate de diéthylène glycol, le diallylcarbonate de triethylène glycol, le di(2-éthylallylcarbonate) de propylène glycol, le diallylcarbonate de dipropylène glycol, le di(2-éthylallylcarbonate) de triméthylène glycol et le diallylcarbonate de pentaméthylène glycol.

Le diallylcarbonate préféré est le diallylcarbonate de diéthylène glycol vendu sous la dénomination commerciale CR-39 Allyl Diglycol Carbonate par la société PPG INDUSTRIES INC.

Le monomère préféré comportant un groupe allylique et une fonction méthacrylique est le méthacrylate d'allyle.

Parmi les monomères (II) particulièrement recommandés, on peut citer le tripropylèneglycol di(méth)acrylate, les polyéthylène glycol diméthacrylate (par exemple le polyéthylèneglycol 600-diméthacrylate), les polypropylène glycol diméthacrylate (par exemple le polypropylèneglycol 400-diméthacrylate), les bisphénol A alcoxylé diméthacrylate, en particulier les bisphénol A éthoxylé et propoxylé diméthacrylate (par exemple le bisphénol-A 5-éthoxylé diméthacrylate, le bisphénol-A 4,8-éthoxylé diméthacrylate et le bisphénol-A 30 éthoxylé diméthacrylate).

Parmi les monomères (II) monofonctionnels, on peut également citer les oligomères mono(méth)acrylate aromatiques, et parmi les monomères trifonctionnels, le tri(2-hydroxyéthyl)isocyanurate triacrylate, le triméthylol propane acrylate éthoxylé et le triméthylol propane acrylate propoxylé.

Une condition importante des compositions polymérisables selon l'invention est qu'elles conduisent à des substrats polymères transparents ayant une température de transition vitreuse telle que 70°C ≤ Tg ≤ 110°C, de préférence, 80°C ≤ Tg ≤ 100°C.

Lorsqu'il est présent, le monomère ou les monomères (II) doivent être tels que la composition polymérisable finale conduise à des substrats ayant une température de transition vitreuse satisfaisant à la relation ci-dessus. Le ou les monomères (II) lorsqu'ils sont présents dans la composition selon l'invention, représentent en général de 20 à 60 % en poids des monomères polymérisables de la composition.

De préférence, lorsque la valeur moyenne de $\overline{m+n}$ pour les monomères de formule (I) présents dans la composition selon l'invention est inférieure à environ 4 à 5, la proportion de monomères (II) est généralement comprise entre 35 et 60 % en poids par rapport au poids total des monomères polymérisables présents dans la composition et

on utilisera des monomères (II) ayant des chaînes relativement plus longues, cependant que lorsque la valeur moyenne de $\overline{m + n}$ des monomères (I) est supérieure à environ 4 ou 5, le ou les monomères (II) représentent de préférence de 20 à 50 % en poids des monomères polymérisables présents dans la composition et on utilisera des monomères ayant des longueurs de chaîne relativement plus courtes.

Pour des monomères de formule (I) dont la valeur moyenne est de l'ordre de 4 à 5, on utilise de 0 à 50 % en poids de monomères (II).

En outre, lorsque l'on souhaite obtenir une composition polymérisable pour la fabrication d'articles d'optique ou ophtalmiques ayant des propriétés photochromiques, il est souhaitable que la composition comprenne un ou plusieurs monomères (II) choisis parmi le groupe (A) de monomères à longue chaîne, ce groupe étant constitué des monomères suivants :

- les monomères de formule (IIa), dans laquelle p peut prendre les valeurs de 10 à 50 ;
- les monomères de formule (IIb) dans laquelle $\overline{Y}$ est un groupe alkylène de 10 à 50 atomes de carbone ; et
- les monomères de formule (IIc) pour lesquels $\overline{q + r} \geq 15$.

Ce ou ces monomères du groupe (A) représentent de préférence 5 à 15 % en poids des monomères copolymérisables de la composition.

Il est préférable que ces monomères à longues chaînes ne soient pas présents à une concentration trop élevée car ils abaisseraient trop notablement la valeur de Tg.

De préférence, pour l'obtention d'articles photochromiques, on utilisera un mélange de monomères (II) dont l'un au moins sera choisi parmi les monomères du groupe (A) et au moins un autre sera choisi parmi les monomères (II) de longueur de chaîne inférieure à celles des monomères du groupe (A).

Il est remarquable de constater que les polymères obtenus à partir des compositions polymérisables selon l'invention sont rendus photochromisables sans l'ajout de monomères spécifiques tels que les plastifiants non polymérisables du type polyéthylèneglycoldibenzoate, tels que décrits dans le document WO-95/10790. Il s'agit là d'un avantage particulièrement intéressant de l'invention car de tels plastifiants non polymérisables posent des problèmes lors des traitements ultérieurs des verres optiques (traitement sous vide, ...) qui sont donc évités dans le cas de l'invention.

Les compositions selon l'invention comprennent également un système d'amorçage de la polymérisation. Le système d'amorçage de polymérisation peut comportér un ou plusieurs agents d'amorçage de polymérisation thermique, ou photochimique ou encore, de préférence, un mélange d'agents d'amorçage de polymérisation thermique et photochimique. Ces agents d'amorçage sont bien connus dans la technique et on peut utiliser tout agent d'amorçage classique. Parmi les agents d'amorçage de polymérisation thermique utilisables dans la présente invention, on peut citer les péroxydes tels que le péroxyde de benzoyle, le péroxydicarbonate de cyclohexyle, et le péroxydicarbonate d'isopropyle.

Parmi les photoamorceurs, on peut citer en particulier l'oxyde de 2,4,6-triméthylbenzoyldiphénylphosphine, la 1-hydroxycyclohexylephénylcétone, la 2,2-diméthoxy 1,2-diphényléthane 1-one, et les alkyles benzoyl éthers.

En général, les agents d'amorçage sont utilisés en proportion de 0,01 à 5 % en poids par rapport au poids total des monomères polymérisables contenus dans la composition. Comme indiqué précédemment, de préférence encore, la composition comprend à la fois un agent d'amorçage de polymérisation thermique et un photo amorceur.

Les compositions polymérisables selon l'invention peuvent également comporter des additifs classiquement utilisés dans des compositions polymérisables pour le moulage d'articles d'optique ou ophtalmiques, en particulier des verres de lunettes et des lentilles, dans des proportions classiques, à savoir des inhibiteurs, des colorants, des absorbeurs UV, des parfums, des déodorants, des antioxydants, des agents anti-jaunissement et des composés photochromiques.

Pour obtenir des articles d'optique ou ophtalmiques ayant des propriétés photochromiques, on peut incorporer un ou plusieurs composés photochromiques par tout moyen connu. On peut soit directement incorporer le composé ou les composés photochromiques sous forme de pigment dans la composition polymérisable ou encore incorporer le ou les matériaux photochromiques dans le substrat polymère obtenu à partir des compositions polymérisables par un procédé bien connu d'imbibation et de transfert thermique.

On peut utiliser tout composé photochromique classique tel que des spirooxazines et des chromènes.

Dans les exemples suivants, sauf indication contraire, toutes les parties et pourcentages sont exprimés en poids, et les proportions des additifs, autres que les monomères polymérisables, sont exprimées par rapport au poids total des monomères polymérisables de la composition.

**<u>Exemple comparatif A et exemple 1</u>**

On a préparé les compositions polymérisables du Tableau I ci-dessous et on a coulé ces compositions entre

deux moules plans présentant un écartement de 2 mm, puis on les a prépolymérisées pendant 3 secondes dans un four de photopolymérisation statique IST. Le moule était placé verticalement entre deux lampes dont l'éclairement était ajusté à 70 milliwatts / $cm^2$. Ces compositions étaient ensuite polymérisées 10 minutes dans un four dynamique de polymérisation UV assistée thermiquement à 120°C. Les moules ont été désassemblés et le substrat polymère biplan obtenu était recuit pendant deux heures à 60-120°C. Les propriétés physiques des substrats polymères sont également indiquées dans le Tableau I ci-dessous.

## TABLEAU I

| | EXEMPLE COMPARATIF A | EXEMPLE 1 |
|---|---|---|
| **Monomères polymérisables** | | |
| Néopentylglycol diméthacrylate | 100 | |
| EBP2PODMA | | 100 |
| **Additifs** | | |
| Photoinitiateur CGI 1850 (CIBA) | 0,1 % | 0,1 % |
| Absorbeur UV Cyasorb® UV 5411 (Cyanamid) | 0,07 % | 0,07 % |
| Indice $n_d$, 25°C | 1,4983 | 1,4930 |
| Nombre d'Abbe | 54 | 55 |
| Masse volumique, $g/cm^3$ | 1,18 | 1,07 |
| Retrait, % | 11,3 | 8,9 |
| Couleur | Jaune pâle | Incolore |
| Tg, °C | 145 | 108 |
| Reprise d'eau, % | 1,7 | 0,6 |

Le matériau polymérisé obtenu à partir de la composition selon l'invention présente une plus faible masse volumique que le matériau de l'exemple comparatif A.

La composition de l'exemple 1 présente des propriétés photochromiques supérieures à celles de l'exemple comparatif A.

**Exemples comparatifs B et C et exemples 2 à 5**

On a réalisé les substrats polymères à partir de compositions polymérisables selon l'invention comme précédemment. Les compositions et les propriétés des substrats obtenus sont indiquées dans le tableau II ci-dessous.

## TABLEAU II

| | Exemple comparatif B | Exemple comparatif C | Exemple 2 | Exemple 3 | Exemple 4 | Exemple 5 |
|---|---|---|---|---|---|---|
| EBP2PODMA | 0 | 13 | 40 | 49 | 55 | 67 |
| BPA5EODMA | 24 | 22 | 20 | 14 | 18 | 17 |
| PPG400DMA | 76 | 65 | 40 | 37 | 27 | 16 |
| **Additifs** | | | | | | |
| CGI1850 photoamorceur | 0,11 | 0,12 | 0,13 | 0,15 | 0,155 | 0,16 |
| UV5411 absorbeur UV | 0,07 | 0,07 | 0,07 | 0,07 | 0,07 | 0,07 |
| TPP antioxydant | 0,2 | 0,2 | 0,2 | 0,2 | 0,2 | 0,2 |
| **Propriétés** | | | | | | |
| Indice, $n_D$, 25°C | 1,4992 | 1,4993 | 1,5012 | 1,4975 | 1,5015 | 1,5023 |
| Abbe | 58 | 58 | 58 | 58 | 57 | 57 |
| Masse volumique, g/cm$^3$ | 1,114 | 1,108 | 1,102 | 1,093 | 1,09 | 1,085 |
| Colorabilité, Tv rouge, PS 20/10 | 22 | 29 | 32 | 35 | 40 | 45 |
| Indice de jaune YI, 160/10 | 3,2 | 3,3 | 3,2 | 3,1 | 3,5 | 3,2 |
| Essai d'insolation | OK | OK | OK | OK | OK | OK |
| Transmission Tv % | 90,7 | 91 | 91,1 | 92 | 91,5 | 91,5 |
| Coupure UV, nm | 375 | 375 | 375 | 375 | 375 | 375 |
| reprise eau, % | 1,6 | 1,6 | 1,5 | 1,2 | 1,1 | 0,8 |
| Choc, 12/10, -2,00 Test pratiqué sur un verre de 1,2 mm d'épaisseur centre | OK | OK | OK | OK | OK | OK |
| Tg (maximum tg δ), °C | 50 | 63 | 75 | 90 | 95 | 100 |
| Dureté, MPa, 25°C | 30 | 62 | 76 | 82 | 95 | 100 |
| Résistance à l'abrasion (Bayer) | (1,51) | (1,45) | (1,25) | (1,11) | (1,0) | (0,9) |

EBP2PODMA : 2-éthyl-2-butyl-1,3-propanediol 2x-propoxylé diméthacrylate

PPG400DMA : polypropylèneglycol 400 diméthacrylate

BPA5EODMA : Bisphénol-A 5-éthoxylé diméthacrylate

TPP : Triphénylphosphine (antioxydant)

Des résultats analogues ont été obtenus avec un système d'amorçage mixte UV et thermique. Le procédé de polymérisation comprend alors une prépolymérisation par les UV (ou prise en gel) de 3 secondes puis une polymérisation thermique dans une étuve à air (1h, 120°C) et le catalyseur utilisé est le TBPEH (éthyl-2-peréthanoate de butyl tertiaire) fourni par la société SPQ.

Les compositions 2 à 4 fournissent un excellent compromis entre les différentes propriétés. Dans tous les cas, les masses volumiques des substrats polymérisés obtenus sont très inférieures à celles du matériau de référence bas indice, CR39® (1,32), commercialisé par la société PPG Industries.

Les matériaux polymérisés obtenus à partir des compositions B et C sont déformés lors d'une opération de surfaçage.

**Exemples 6 à 12**

On a préparé et polymérisé comme précédemment, les compositions indiquées dans le Tableau III ci-dessous. Les propriétés des matériaux sont également données dans le Tableau III.

**TABLEAU III**

| | 6 | 7 | 8 | 9 | 10 | 11 | 12 |
|---|---|---|---|---|---|---|---|
| EBP2PODMA | 80 | 60 | 60 | 60 | 60 | 60 | 60 |
| D101 | | | 30 | | | | |
| PPG400DMA | | 30 | | | 20 | 20 | |
| SR344 | | | | 30 | | | |
| DCPMA | | | | | | | 30 |
| CN131 | 20 | 10 | | | | | 5 |
| SR368 | | | 10 | 10 | | | 5 |
| CD501 | | | | | 20 | | |
| CD502 | | | | | | 20 | |

**Additifs**

| | | | | | | | |
|---|---|---|---|---|---|---|---|
| % CGI1850 | 0,15 | 0,15 | 0,15 | 0,15 | 0,15 | 0,15 | 0,15 |
| % UV5411 | 0,07 | 0,07 | 0,07 | 0,07 | 0,07 | 0,07 | 0,07 |
| % TPP | 0,2 | 0,2 | 0,2 | 0,2 | 0,2 | 0,2 | 0,2 |

**Propriétés**

| | | | | | | | |
|---|---|---|---|---|---|---|---|
| Indice, $n_D$, 25°C | 1,504 | 1,49 | 1,52 | 1,49 | 1,49 | 1,49 | 1,49 |
| Abbe | 57 | 58 | 55 | 58 | 57 | 57 | 58 |
| Masse volumique, g/cm$^3$ | 1,09 | 1,1 | 1,1 | 1,09 | 1,09 | 1,09 | 1,08 |
| colorabilité Tv rouge, PS 20/10 | 41,3 | 44 | 39 | 35 | 40 | 35 | 32 |
| Tg, °C | 92 | 80 | 88 | 82 | 91 | 92,5 | 101 |

Monomères monofonctionnels :

- oligomère monoacrylate aromatique CN131 - Cray Valley

Monomères difonctionnels :

- Bisphénol A diméthacrylate diéthoxylé D101 Akzo

- Polyéthylène glycol 400 diacrylate SR344 Sartomer
- Dicyclopentadiène diméthacrylate DCPMA - Shin Nakamura

Monomères trifonctionnels :

- tris(2-hydroxyéthyl)isocyanurate triacrylate SR368 Sartomer
- Triméthylolpropane acrylate éthoxylé CD502 Sartomer
- Triméthylolpropane acrylate propoxylé CD501 Sartomer

**Exemple comparatif D et exemples 13 à 16**

On a préparé et polymérisé comme précédemment, les compositions indiquées dans le Tableau IV ci-après.

On a incorporé dans les substrats polymérisés obtenus des composés photochromiques (formulation T4-Gray de la société Transitions Optical) par imbibation avec deux conditions d'imbibation à savoir :

(a) 3 heures à 135°C, et
(b) 6 heures à 140°C.

A titre de comparaison, on a également imbibé dans les conditions (a) un substrat CR-407 du commerce (polymère acrylique aromatique $n_D$ = 1,55, Tg = 88°C).

On a déterminé la cinétique photochromique des substrats polymérisés imbibés à une température de 30°C.

Les substrats étaient irradiés pendant 15 minutes dans une cellule thermostatée à l'air, avec un rayonnement UV de 365 nm, 10W/$m^2$ et 53.4 klux.

La décoloration a été effectuée dans le noir.

Les résultats sont donnés dans le Tableau V.

## TABLEAU IV

| | Exemple comparatif D | Exemple 13 | Exemple 14 | Exemple 15 |
|---|---|---|---|---|
| NPG2PODMA | 100 | - | - | - |
| EBP2PODMA | - | 100 | 50 | 50 |
| PPG400DMA | - | - | 10 | 10 |
| BPA4,8EODMA | - | - | 30 | 30 |
| BPA30EODMA | - | - | 9 | - |
| PEG600DMA | - | - | - | 9 |
| MBOL | - | - | 1 | 1 |
| amorceur CGI 1850 | 0,15 | 0,15 | 0,15 | 0,15 |
| absorbeur UV UV5411 | 0,07 | 0,07 | 0,07 | 0,07 |
| Indice de réfraction $n_D$ | - | - | 1,5 | 1,5 |
| Abbe | - | - | 57 | 58 |
| Tg°C | 119 | 108 | 90 | 86 |

NPG2PODMA :Néopentylglycol 2x-propoxylé diméthacrylate
PPG400DMA: Polypropylèneglycol 400 diméthacrylate
BPA4,8EODMA: Bisphénol A 4,8-éthoxylé diméthacrylate
BPA30EODMA : Bisphénol A 30-éthoxylé diméthacrylate
PEG600DMA : Polyéthylèneglycol 600 diméthacrylate
MBOL : Méthylbuténol (agent anti-jaune)

## TABLEAU V

| | Transmission % | | Temps de décoloration | |
|---|---|---|---|---|
| | o minute | 15 minutes | t 1/2(s) | t 3/4(s) |
| Comparatif D (a) | 91,2 | 41,9 | 122 | 662 |
| Comparatif D (b) | 90,4 | 35,9 | 151 | 874 |
| Exemple 13 (a) | 90,7 | 30,9 | 66 | 324 |
| Exemple 13 (b) | 90 | 30,8 | 65 | 310 |
| Exemple 14 (a) | 88,3 | 23,4 | 34 | 116 |
| Exemple 14 (b) | 87,6 | 25,7 | 35 | 135 |
| Exemple 15 (a) | 89,2 | 25,5 | 56 | 219 |
| Exemple 15 (b) | 88 | 24,7 | 59 | 300 |
| CR 407 (a) | 84 | 26 | 34 | 121 |

La composition de l'exemple 14 présente des propriétés photochromiques supérieures ou comparables à celles du substrat CR407®.

Un autre aspect important des compositions polymérisables selon l'invention est qu'elles se prêtent bien à la fabrication d'articles d'optique et ophtalmiques tels que des lentilles par la technique de surmoulage. Une technique de fabrication de lentilles par surmoulage sur la surface avant d'une préforme est décrite entre autre dans les documents US-A-5,531,940, US-5 372 755 et US-5 288 221.

La réalisation d'articles photochromiques par surmoulage est exposée plus particulièrement dans le document US-5 531 940.

Brièvement, cette technique de surmoulage consiste à couler une composition polymérisable en un verre organique de qualité optique dans l'intervalle ménagé entre un moule et la surface avant d'une préforme de lentille en verre organique de qualité optique et à polymériser la composition coulée pour former un revêtement polymérisé adhérent sur la surface de la lentille. La préforme de lentille peut être finie ou semi-finie et la surface revêtue de la préforme peut être éventuellement dépolie. I1 est également possible d'effectuer le surmoulage sur la surface arrière de la lentille d'une préforme.

Pour mettre en évidence l'aptitude au surmoulage des compositions selon l'invention on a coulé entre la surface arrière d'une préforme de lentille de 2mm d'épaisseur en différents verres organiques (y compris en un verre organique obtenu à partir d'une composition selon l'invention) et un moule en matériau inorganique des compositions photo-polymérisables selon l'invention et selon l'art antérieur. On a polymérisé ces compositions coulées par irradiation UV (entre deux lampes à mercure 70 mw/$cm^2$) pendant 60 secondes. Les produits obtenus sont ensuite démoulés et fracturés avec un marteau. La couche polymérisée est considérée comme adhérant à la préforme si les morceaux ne présentent pas de rupture adhésive à l'interface entre la couche et la préforme. Les compositions sont données ci-après et les résultats récapitulés dans le tableau VI.

| **COMPOSITION 1 (selon l'invention)** | |
|---|---|
| EBP2PODMA | 50 |
| PPG 400 DMA | 19 |
| BPA 4,8 EODMA | 30 |
| MBOL | 1 |
| CGI 1850 | 0,1 |
| UV 5411 | 0,07 |

| **COMPOSITION 2 (classique)** | |
|---|---|
| Tripropylèneglycol diméthacrylate (TPGDMA) | 37,4 |
| PPG 400 DMA | 48,5 |
| D 121 | 14,1 |
| TPP | 0,2 |
| CGI 1850 | 0,10 |

Les préformes de lentilles ont été obtenues en coulant dans un moule la composition choisie et en effectuant une prépolymérisation par voie photochimique de 3 secondes sous UV 70 mW/$cm^2$ suivi d'une polymérisation thermique à 120°C pendant 10 minutes. Après démoulage, on effectue un recuit de 2 heures à 120°C.

TABLEAU VI

| **Préforme de lentille** | | **Composition de surmoulage** | **Adhérence** |
|---|---|---|---|
| Composition | Face arrière dépolie | | |
| 2 | non | 2 | non |
| 2 | oui | 2 | non |
| 2 | oui | CR39 (diéthylène-glycol bis (allyl carbonate) | non |
| 2 | oui | BPA polyéthoxylé DMA | non |
| 1 | non | 2 | oui |
| 1 | non | 1 | oui |
| 1 | non | BPA polyéthoxylé DMA | oui |

TPGDMA : Tripropylèneglycoldiméthacrylate
EBP2PODMA : 2-éthyl-2-butyl-1,3propanediol 2x-propoxylé diméthacrylate
BPA polyéthoxylé DMA : Bisphénol A polyéthoxylé diméthacrylate (Des compositions polymérisables à base de ces monomères sont décrites dans FR-A-2 699 541)
CR39® : Composition à base de diéthylèneglycol bis(allylcarbonate) commercialisée par PPG Industries.

Les propriétés physiques des substrats polymères ont été déterminées comme indiqué ci-après.
L'indice de jaune a été mesuré selon la norme ASTM D 1925-63.
La résistance à l'abrasion Bayer a été déterminée selon la norme ASTM F 735-81.
La résistance au choc a été déterminée selon le test FDA américain (essai de la chute de bille) dans lequel on laisse tomber sur une lentille, une bille de 16g d'une hauteur de 1,27 m correspondant à une énergie de 200 mJ.
OK signifie que le verre est intact après le choc.
L'essai d'insolation consiste à soumettre des lentilles pendant 200 heures à une insolation dans les mêmes conditions avec un appareil SUNTEST HANAU émettant un rayonnement de 24,4 $w/m^2$ dans le domaine spectral de 300-400 nm et à mesurer l'indice de jaune (YI) avant et après irradiation. Le test est considéré comme positif (OK) si la différence de YI est inférieure ou égale à 1.

Mesure de la colorabilité

La mesure donnée est la valeur de la transmission mesurée dans le visible d'un verre de 2 mm d'épaisseur centre coloré par trempage dans un bain aqueux à 94°C dans lequel est dispersé un pigment rouge "disperse Red 13" de la société Eastman Kodak.
La mesure de la Tg est effectuée par DMA (Analyse mécanique dynamique) sur une éprouvette de 5,2 cm x 1 cm x 2 mm (épaisseur) plane.
L'essai est effectué en flexion 3 points.
Tg correspond au maximum du rapport

$$\frac{E''}{E'}\ \frac{\text{(module de perte)}}{\text{(module de conservation)}}.$$

L'essai de reprise d'eau consiste à placer un morceau de lentille dans une étuve pendant 12 heures à 50°C. On pèse ensuite l'échantillon (mesure de la masse initiale) puis on l'immerge dans de l'eau distillée à 50°C, à pression atmosphérique pendant 12 heures.
Au bout des 12 heures on retire l'échantillon, on l'essuie et on le pèse (masse après immersion).
La valeur pour la reprise d'eau est donnée par :

$$\text{Reprise d'eau} = \frac{\text{masse après immersion - masse initiale}}{\text{masse initiale}} \times 100$$

Les valeurs de dureté ont été mesurées au moyen d'un Microduromètre FISCHER équipé d'une pointe BERGOVITCH sur une lentille plane de 1,6 mm d'épaisseur.
D'une manière générale, sauf indication contraire, tous les essais ont été effectués sur des échantillons de 2 mm d'épaisseur.

## Revendications

**1.** Composition de monomères polymérisables, **caractérisée en ce qu'**elle comprend, par rapport au poids total des monomères polymérisables présents dans la composition :

- 30 à 100 % d'un ou plusieurs monomères (I) de formule :

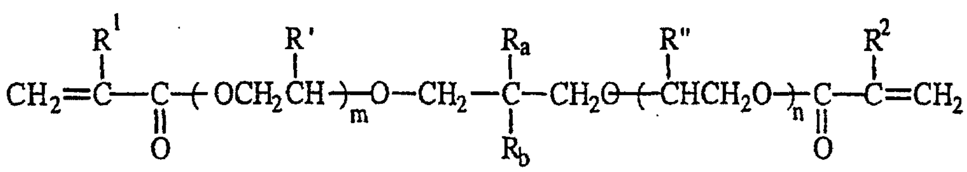

(I)

dans laquelle $R^1$, $R^2$, R' et R" représentent, indépendamment les uns des autres, un atome d'hydrogène ou un radical méthyle, $R_a$ et $R_b$, identiques ou différents, représentent chacun un groupe alkyle ayant 1 à 10 atomes de carbone à la condition que $R_a$ et $R_b$ ne représentent pas simultanément un groupe méthyle et m et n sont des entiers satisfaisant à la relation $2 \leq m + n \leq 20$ ;

- 0 à 70 % d'au moins un autre monomère polymérisable (II) par voie radicalaire, différent du monomère (I), tel qu'un substrat transparent résultant de la polymérisation de la composition ait une température de transition vitreuse satisfaisant à la relation 70°C ≤ Tg ≤ 110°C ; et
- au moins un système d'amorçage de la polymérisation.

**2.** Composition selon la revendication 1, **caractérisée en ce que** le ou les monomères (II) comportent une ou plusieurs fonctions (méth)acrylate et/ou un ou plusieurs groupes allyliques, de préférence deux fonctions méthacrylate, deux groupes allyliques ou une fonction méthacrylate et un groupe allylique.

**3.** Composition selon la revendication 1 ou 2, **caractérisée en ce que** $R_a$ et $R_b$ représentent un groupe alkyle en $C_2$ à $C_{10}$,de préférence éthyle, propyle ou butyle.

**4.** Composition selon l'une quelconque des revendications 1 à 3, **caractérisée en ce que** $R^1$ et $R^2$ sont des groupes $CH_3$.

**5.** Composition selon la revendication 1, **caractérisée en ce que** le monomère (I) est le 2-éthyl-2-n-butyl-1,3-propanediol 2x-propoxylé diméthacrylate.

**6.** Composition selon l'une quelconque des revendications 1 à 5, **caractérisée en ce que** le (ou les) monomère(s) (II) est (sont) choisi(s) parmi :

a) les monomères de formule

$$R^3\text{-}O(R^5O)_pR^4 \qquad \text{(IIa)}$$

dans laquelle $R^3$ est un radical (méth)acryloyle, $R^4$ est H, un radical (méth)acryloyle ou un radical hydrocarboné ayant 1 à 40 atomes de carbone, $R^5$ est un groupe alkylène en $C_1$-$C_5$ et p est un entier de 2 à 50 ;
b) les monomères de formule :

$$R^6\text{-}Y\text{-}R^7 \qquad \text{(IIb)}$$

où $R^6$ et $R^7$ représentent H, un groupe acryloyle ou un groupe (méth)acryloyle, l'un au moins de $R^6$ ou $R^7$ étant un groupe (méth)acryloyle, et Y est un radical alkylène ayant de 2 à 50 atomes de carbone ;
c) les monomères de formule :

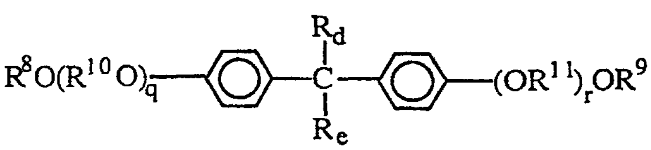
(IIc)

dans laquelle $R^8$ et $R^9$ représentent un atome d'hydrogène, un groupe acryloyle ou un groupe méthacryloyle, à la condition que l'un au moins de $R^8$ ou $R^9$ soit un groupe (méth)acryloyle, $R_d$ et $R_e$ représentent H ou $CH_3$, $R^{10}$ et $R^{11}$ représentent un groupe alkylène en $C_1$-$C_5$, et q et r sont tels que $q + r \geq 2$ ; et
d) les di(allylcarbonate) de poly(alkylène) glycol et les monomères comportant une fonction méthacrylate et un groupe allylique.

**7.** Composition selon la revendication 6, **caractérisée en ce que** les monomères (IIa) sont choisis parmi les polyméthylène glycol mono et di(méth)acrylate, les polyéthylène glycol mono et di(méth)acrylate, les polypropylène glycol mono et di(méth)acrylate, les alcoxy polyméthylène glycol mono et di(méth)acrylate, les alcoxy polyéthylène glycol mono et di(méth)acrylate, les alcoxy polypropylène glycol mono et di(méth)acrylate et les polyéthylène glycol polypropylène glycol mono et di(méth)acrylate.

**8.** Composition selon la revendication 6, **caractérisée en ce que** dans la formule (IIc), $R_d$ et $R_e$ représentent $CH_3$

et $R^{10}$ et $R^{11}$ sont des groupes éthylène ou propylène.

**9.** Composition selon la revendication 6, **caractérisée en ce qu'**elle comprend un ou plusieurs monomères (II) choisis parmi le groupe (A) de monomères à longues chaînes, ce groupe (A) étant constitué :

- des monomères de formule (IIa), dans laquelle p peut prendre les valeurs de 10 à 50 ;
- des monomères de formule (IIb) dans laquelle $\overline{Y}$ est un groupe alkylène de 10 à 50 atomes de carbone ; et
- des monomères de formule (IIc) pour lesquels $\overline{q + r} \geq 15$.

**10.** Composition selon la revendication 9, **caractérisée en ce que** le ou les monomères du groupe (A) représentent 5 à 15 % en poids des monomères copolymérisables de la composition.

**11.** Composition selon l'une quelconque des revendications 1 à 10, **caractérisée en ce que** le ou les monomère (II) sont choisis parmi le polypropylène glycol 400 diméthacrylate, le polyéthylèneglycol 600-diméthacrylate, le bisphénol A diéthoxy diméthacrylate, le bisphénol A 5-éthoxylé diméthacrylate, le bisphénol-A 4,8-éthoxylé diméthacrylate, le bisphénol-A 30 éthoxylé diméthacrylate, l'oligomère monoacrylate aromatique, le dicyclopentadiène diméthacrylate, le tri(2-hydroxyéthyl)isocyanurate triacrylate, le triméthylolpropane acrylate éthoxylé, le triméthylolpropane acrylate propoxylé, le di(allylcarbonate) de diéthylène glycol et le méthacrylate d'allyle.

**12.** Composition selon l'une quelconque des revendications 1 à 11, **caractérisée en ce que** le système d'amorçage de polymérisation comprend un ou plusieurs amorceurs thermiques, un ou plusieurs photoamorceurs ou un mélange d'un ou plusieurs amorceurs thermiques et d'un ou plusieurs photoamorceurs.

**13.** Substrat polymère transparent obtenu par polymérisation d'une composition selon l'une quelconque des revendications 1 à 12.

**14.** Article d'optique ou ophtalmique comprenant un substrat polymère selon la revendication 13.

**15.** Article d'optique ou ophtalmique selon la revendication 13, **caractérisé en ce que** le substrat polymère est surmoulé sur une surface d'une préforme en verre organique transparent.

**16.** Article d'optique ou ophtalmique selon l'une quelconque des revendications 14 ou 15, **caractérisé en ce qu'**un pigment photochromique est incorporé dans le substrat qui le constitue en tout ou partie.

## Claims

**1.** Polymerizable monomer composition, **characterized in that** it comprises, based on the total weight of the polymerizable monomers present in the composition :

- 30 to 100 % of one or more monomers (I) of formula :

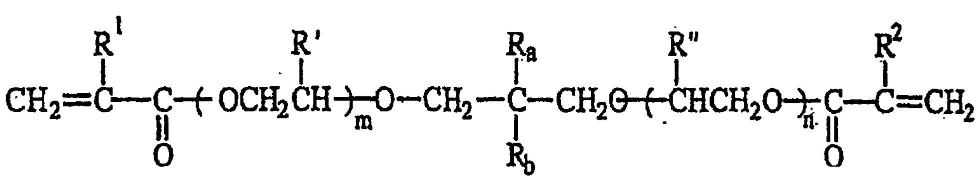

(I)

  in which $R^1$, $R^2$, R' and R" represent, independently of one another, a hydrogen atom or a methyl radical, $R_a$ and $R_b$, which are identical or different, each represent an alkyl group having 1 to 10 carbon atoms, provided that $R_a$ and $R_b$ do not simultaneously represent a methyl group, and m and n are integers satisfying the relationship $2 \leq m + n \leq 20$ ;
- 0 to 70 % of at least one other polymerizable monomer (II) by a radical route, other than the monomer (I), such that a transparent substrate resulting from the polymerization of the composition has a glass transition temperature satisfying the relationship $70°C \leq Tg \leq 110°C$ ; and
- at least one system for initiating the polymerization.

**2.** Composition according to claim 1, **characterized in that** the monomer or monomers (II) comprise one or more (meth)acrylate functional groups and/or one or more allyl groups, preferably two methacrylate functional groups, two allyl groups or one methacrylate functional group and one allyl group.

**3.** Composition according to claim 1 or 2, **characterized in that** $R_a$ and $R_b$ represent a $C_2$ to $C_{10}$ alkyl group, preferably an ethyl, propyl or butyl group.

**4.** Composition according to any one of claims 1 to 3, **characterized in that** $R^1$ and $R^2$ are $CH_3$ groups.

**5.** Composition according to claim 1, **characterized in that** the the monomer (I) is 2-ethyl-2-n-butyl-1,3-propanediol 2x-propoxylate dimethacrylate.

**6.** Composition according to any one of claims 1 to 5, **characterized in that** the monomer(s) (II) is (are) selected from :

a) monomers of formula :

$$R^3\text{-}O(R^5O)_p\ R^4 \qquad \textbf{(IIa)}$$

in which $R^3$ is a (meth)acryloyl radical, $R^4$ is H, a (meth)acryloyl radical or a hydrocarbon radical having 1 to 40 carbon atoms, $R^5$ is a $C_1$-$C_5$ alkylene group and p is an integer from 2 to 50;
b) monomers of formula :

$$R^6\text{-}Y\text{-}\ R^7 \qquad \text{(IIb)}$$

wherein $R^6$ and $R^7$ represent H, an acryloyl group or a (meth)acryloyl group, at least one of $R^6$ or $R^7$ being a (meth)acryloyl group, and Y is an alkylene radical having from 2 to 50 carbon atoms;
c) monomers of formula:

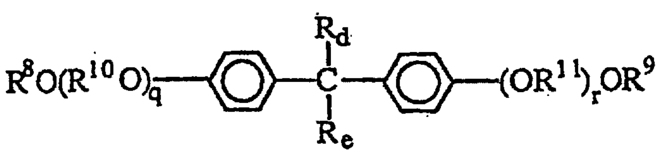

**(IIc)**

in which $R^8$ and $R^9$ represent a hydrogen atom, an acryloyl group or a methacryloyl group, provided that at least one of $R^8$ and $R^9$ is a (meth)acryloyl group, $R_d$ and $R_e$ represent H or $CH_3$, $R^{10}$ and $R^{11}$ represent a $C_1$-$C_5$ alkylene group, and q and r are such that $\overline{q+r} \geq 2$; and
d) poly(alkylene glycol) di(allyl carbonate) and monomers comprising a methacrylate functional group and an allyl group.

**7.** Composition according to claim 6, **characterized in that** the monomers (IIa) are selected from poly(methylene glycol) mono- and di(meth)acrylate, poly(ethylene glycol) mono- and di(meth)acrylate, poly(propylene glycol) mono- and di(meth)acrylate, alkoxypoly(methylene glycol) mono- and di(meth)acrylate, alkoxypoly(ethylene glycol) mono- and di(meth)acrylate, alkoxypoly(propylene glycol) mono- and di(meth)acrylate and poly(ethylene glycol)-poly(propylene glycol) mono- and di(meth)acrylate.

**8.** Composition according to claim 6, **characterized in that**, in the formula (IIc), $R_d$ and $R_e$ represent $CH_3$ and $R^{10}$ and $R^{11}$ are ethylene or propylene groups.

**9.** Composition according to claim 6, **characterized in that** it comprises one or more monomers (II) selected from the group (A) of long-chain monomers, this group (A) comprising:

- monomers of formula (IIa) in which p can take the values from 10 to 50;
- monomers of formula (IIb) in which Y is an alkylene group comprising 10 to 50 carbon atoms; and
- monomers of formula (IIc) for which $\overline{q+r} \geq 15$.

**10.** Composition according claim 9, **characterized in that** the monomer or monomers of the group (A) represent 5 to 15 % by weight of the copolymerizable monomers of the composition.

**11.** Composition according to any one of claims 1 to 10, **characterized in that** the monomer(s) is/are selected from poly(propylene glycol-400)dimethacrylate, poly(ethylene glycol-600)dimethacrylate, bisphenol A diethoxy dimethacrylate, bisphenol A 5-ethoxylate dimethacrylate, bisphenol A 4,8-ethoxylate dimethacrylate, bisphenol A 30-ethoxylate dimethacrylate, the aromatic monoacrylate oligomer, dicyclopentadiene dimethacrylate, tri(2-hydroxyethyl)isocyanurate triacrylate, trimethylolpropane ethoxylate acrylate, trimethylolpropane propoxylate acrylate, di(ethylene glycol) di(allyl carbonate) and allyl methacrylate.

**12.** Composition according to any one of claims 1 to 11, **characterized in that** the polymerization initiating system comprises one or more thermal initiators, one or more photoinitiators or a mixture of one or more thermal initiators and of one or more photoinitiators.

**13.** Transparent polymer substrate obtained by polymerization of a composition according to any one of claims 1 to 12.

**14.** Optical or ophthalmic article comprising a polymer substrate according to claim 13.

**15.** Optical or ophthalmic article according to claim 13, **characterized in that** the polymer substrate is overmoulded on a surface of a preform made of transparent organic glass.

**16.** Optical or ophthalmic article according to either one of claims 14 and 15, **characterized in that** a photochromic pigment is incorporated in the substrate which constitutes it in all or part.

**Patentansprüche**

**1.** Polymerisierbare Monomerzusammensetzung, **dadurch gekennzeichnet, dass** sie umfasst, mit Bezug auf das Gesamtgewicht an in der Zusammensetzung vorhandenen, polymerisierbaren Monomeren:

- 30 bis 100 % eines oder mehrere Monomere (I) mit der Formel:

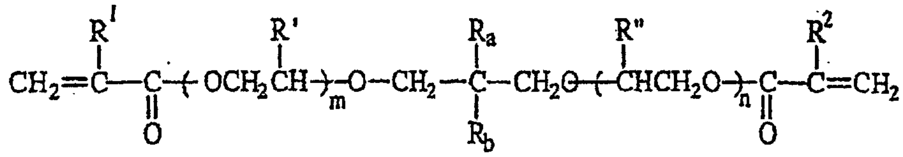

(I)

wobei $R^1$, $R^2$, R' und R" unabhängig voneinander repräsentativ sind für ein Wasserstoffatom oder ein Methylradikal, $R_a$ und $R_b$ identisch zueinander oder unterschiedlich zueinander jeweils repräsentativ sind für eine Alkylgruppe mit ein bis zehn Kohlenstoffatomen, wobei vorausgesetzt ist, dass $R_a$ und $R_b$ nicht gleichzeitig eine Methylgruppe darstellen und wobei m und n Ganzzahlen sind, die die Gleichung $2 \leq m+n \leq 20$ erfüllen;
- 0 bis 70 % von zumindest einem weiteren radikalisch polymerisierbaren Monomer (II), unterschiedlich bezüglich des Monomers (I), wie z. B. ein transparentes Substrat, resultierend aus der Polymerisation der Zusammensetzung, die über eine Glasübergangs- oder Verglasungstemperatur verfügt, die der Beziehung $70°C \leq Tg \leq 110°C$ genügt; und
- zumindest ein Polymerisationsstartersystem.

**2.** Zusammensetzung nach Anspruch 1, **dadurch gekennzeichnet, dass** das oder die Monomer(e) (II) eine oder mehrere Methacrylat-Funktionen und/oder eine oder mehrere Allylgruppen umfasst, vorteilhafterweise zwei Methacrylat-Funktionen, zwei Allylgruppen oder eine Methacrylat-Funktion und eine Allylgruppe.

**3.** Zusammensetzung nach Anspruch 1 oder 2, **dadurch gekennzeichnet, dass** $R_a$ und $R_b$ repräsentativ sind für eine Alkylgruppe mit $C_2$ bis $C_{10}$, bevorzugt Ethyl, Propyl oder Butyl.

**4.** Zusammensetzung nach einem der Ansprüche 1 bis 3, **dadurch gekennzeichnet, dass** $R^1$ und $R^2$ $CH_3$-Gruppen

sind.

5. Zusammensetzung nach Anspruch 1, **dadurch gekennzeichnet, dass** das Monomer (I) 2-Ethyl-2-n-butyl-1,3-propandiol-2x-propoxyl-dimethacrylat ist.

6. Zusammensetzung nach einem der Ansprüche 1 bis 5, **dadurch gekennzeichnet, dass** das (oder die) Monomer (e) (II) ausgewählt ist (sind) unter:

a) Monomeren mit der Gleichung

$$R^3\text{-}O(R^5O)_pR^4 \qquad \text{(IIa)}$$

wobei $R^3$ ein Methacryloyl-Radikal ist, $R^4$ H, ein Methacryloyl-Radikal oder ein Kohlenwasserstoff-Radikal mit 1 bis 40 Kohlenstoffatomen ist, $R^5$ eine A1-kylengruppe mit $C_1$-$C_5$ und p eine ganze Zahl zwischen 2 und 50 ist;

b) Monomeren mit der Gleichung:

$$R^6\text{-}Y\text{-}R^7 \qquad \text{(IIb)}$$

wobei $R^6$ und $R^7$ repräsentativ sind für H, eine Acryloylgruppe oder eine Methacryloylgruppe, wobei zumindest einer von $R^6$ oder $R^7$ eine Methacryloylgruppe ist, und wobei Y ein Alkylen-Radikal ist, mit 2 bis 50 Kohlenstoffatomen;

c) Monomeren mit der Gleichung:

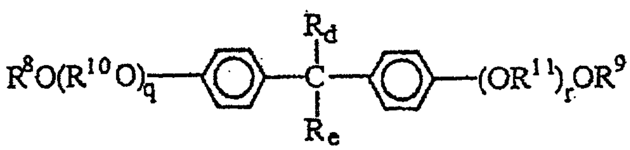

(IIc)

wobei $R^8$ und $R^9$ repräsentativ sind für ein Wasserstoffatom, eine Akryloyloder eine Methacryloylgruppe, vorausgesetzt, dass zumindest eines von $R^8$ oder $R^9$ eine Methacryloylgruppe ist, wobei $R_d$ und $R_e$ repräsentativ sind für H oder $CH_3$, $\overline{R^{10}}$ und $R^{11}$ repräsentativ sind für eine Alkylengruppe mit $C_1$-$C_5$, und wobei q und r dergestalt sind, dass $\overline{q+r} \geq 2$; und

d) Di(allylcarbonaten) von Polyalkylenglycol und Monomeren umfassend eine Methacrylat-Funktion und eine Allylgruppe.

7. Zusammensetzung nach Anspruch 6, **dadurch gekennzeichnet, dass** die Monomere (IIa) ausgewählt sind unter Polymethylenglycol-mono- und -dimethacrylaten, Polyethylenglycol-mono- und -dimethacrylaten, Polypropylenglycol-mono- und -dimethacrylaten, Alkoxypolymethylenglycol-mono- und -dimethacrylaten, Alkoxypolyethylenglycol-mono- und -dimethacrylaten, Alkoxypolypropylenglycol-monound -dimethacrylaten und Polyethylenglycolpolypropylen-mono- und -dimethacrylaten.

8. Zusammensetzung nach Anspruch 6, **dadurch gekennzeichnet, dass** in der Gleichung (IIc) $R_d$ und $R_e$ repräsentativ sind für $CH_3$, wobei $R^{10}$ und $R^{11}$ Ethylen- oder Propylengruppen sind.

9. Zusammensetzung nach Anspruch 6, **dadurch gekennzeichnet, dass** sie ein oder mehrere Monomere (II) umfasst, ausgewählt, unter der Gruppe (A) an langkettigen Monomeren, wobei die Gruppe (A) gebildet ist aus:

- Monomeren der Gleichung (IIa), bei welchen p Werte annehmen kann von 10 bis 50;
- Monomeren der Gleichung (IIb), in welchen $\overline{Y}$ eine Alkylengruppe von 10 bis 50 Kohlenstoffatomen ist; und
- Monomeren der Gleichung (IIc), für welche $\overline{q+r} \geq 15$

**10.** Zusammensetzung nach Anspruch 9, **dadurch gekennzeichnet, dass** das oder die Monomer(e) der Gruppe (A) 5 bis 15 Gew.% an copolymerisierbaren Monomeren der Zusammensetzung darstellen.

**11.** Zusammensetzung nach einem der Ansprüche 1 bis 10, **dadurch gekennzeichnet, dass** das oder die Monomer (e) (II) ausgewählt sind unter Polypropylenglycol-400-dimethacrylaten, Polyethylenglycol-600-dimethacrylaten, Bisphenol-A-diethoxydimethacrylaten, Bisphenol-A-5-ethoxyl-dimethacrylaten, Bisphenol-A-4,8-ethoxyldimethacrylaten, Bisphenol-A-30-ethoxyl-dimethacrylaten, oligomeren aromatischen Monoacrylaten, Dicyclopentadien-dimethacrylaten, Tri(2-hydroxyethyl)isocyansäuretriacrylaten, Trimethylolpropanethoxyacrylaten, Trimethyolpropanpropoxylacrylaten, Di(allylcarbonat)-diethylenglycol und Allylmethacrylaten.

**12.** Zusammensetzung nach einem der Ansprüche 1 bis 11, **dadurch gekennzeichnet, dass** das Polymerisationsstartersystem einen oder mehrere thermische Startmittel, ein oder mehrere Photostartmittel oder eine Mischung aus einem oder mehreren thermischen Startmitteln und einem oder mehreren Photostartmitteln umfasst.

**13.** Transparentes Polymersubstrat, erhalten mittels Polymerisation einer Zusammmensetzung nach einem der.Ansprüche 1 bis 12.

**14.** Optischer oder ophthalmischer Gegenstand, umfassend ein Polymersubstrat nach Anspruch 13.

**15.** Optischer oder ophthalmischer Gegenstand nach Anspruch 13, **dadurch gekennzeichnet, dass** das Polymersubstrat, an einer Fläche einer Vorform aus transparentem organischem Glas angeformt. ist.

**16.** Optischer oder ophthalmischer Gegenstand nach einem der Ansprüche 14 oder 15, **dadurch gekennzeichnet, dass** ein photochromatisches Pigment in das Substrat inkorporiert ist, welches den Gegenstand insgesamt oder teilweise ausbildet.